**Europäisches Patentamt**

**European Patent Office**

**Office européen des brevets**

(19)

(11) Veröffentlichungsnummer: **0 092 806**
**B1**

(12) # EUROPÄISCHE PATENTSCHRIFT

(45) Veröffentlichungstag der Patentschrift:
06.08.86

(51) Int. Cl.⁴: **A 01 D 41/12,** A 01 D 41/02

(21) Anmeldenummer: **83103904.5**

(22) Anmeldetag: **21.04.83**

(54) **Mähdrescher.**

(30) Priorität: **23.04.82 US 371047**

(43) Veröffentlichungstag der Anmeldung:
**02.11.83 Patentblatt 83/44**

(45) Bekanntmachung des Hinweises auf die Patenterteilung:
**06.08.86 Patentblatt 86/32**

(84) Benannte Vertragsstaaten:
**DE FR GB**

(56) Entgegenhaltungen:
**AT - B - 178 750**
**US - A - 4 317 326**

(73) Patentinhaber: **DEERE & COMPANY, 1 John Deere
Road, Moline Illinois 61265 (US)**

(72) Erfinder: **Allen, James Robert, 1357 Pine Acre,
Bettendorf Iowa 52722 (US)**
Erfinder: **Anderson, LaVerne, Jr., R.R. Box 158, New
Windsor Illinois 61465 (US)**
Erfinder: **Leemans, Daniel Louis, 2806 - 18th St. Ct.,
Moline Illinois 61265 (US)**

(74) Vertreter: **Sartorius, Peter, DEERE & COMPANY
European Office, Patent Department
Postfach 503 Steubenstrasse 36-42,
D-6800 Mannheim 1 (DE)**

## Beschreibung

Die Erfindung bezieht sich auf einen Mähdrescher mit zwei über eine Lenkzylinder aufweisende Gelenkeinrichtung verbundenen, je eine Laufradachse aufweisenden Rahmeneinheiten, wobei die Gelenkeinrichtung aus mindestens einem unteren und mindestens einem mit Abstand zum unteren Lenker angeordneten oberen Lenker gebildet ist, wobei jeder Lenker an einem Ende an der einen Rahmeneinheit und an dem anderen Ende an der anderen Rahmeneinheit derart gelenkig angeschlossen ist, dass die Rahmeneinheiten um eine vertikale und eine in etwa horizontal verlaufende Achse gegenseitig verstellbar sind, wobei auf der vorderen Rahmeneinheit eine Dresch- und Trennvorrichtung und auf der hinteren Rahmeneinheit ein Sammelbehälter angeordnet ist und das aus der Dresch- und Trennvorrichtung der vorderen Rahmeneinheit abgegebene Erntegut über eine Fördervorrichtung zu einem Sammelbehälter der hinteren Rahmeneinheit geleitet wird.

Es ist bereits ein Mähdrescher der eingangs aufgeführten Art bekannt (US-A-4 317 326), der ebenfalls eine Gelenkeinrichtung zur Verbindung der beiden Rahmeneinheiten aufweist, wobei der obere Teil der Gelenkeinrichtung aus einem etwas geneigt verlaufenden oberen Lenker besteht, der endseitig über Gelenkbolzen mit den entsprechenden Rahmeneinheiten gelenkig verbunden ist. Der obere Teil der Gelenkeinrichtung weist zwei sich kreuzende Lenker auf, die jeweils endseitig an Halterungen der beiden Rahmeneinheiten gelenkig angeschlossen sind. Die vordere Halterung zum Anschluss der beiden sich kreuzenden Lenker ist als mit Bezug auf die Fahrtrichtung querverlaufender Träger ausgebildet, der an einem annähernd vertikal verlaufenden Bolzen schwenkbar gelagert ist. Auf diese Weise entsteht eine Knicklenkerachse zur Verschwenkung der hinteren bzw. der vorderen Rahmeneinheit. Das aus einer Dresch- und Trennvorrichtung der vorderen Rahmeneinheit abgegebene Erntegut wird über eine Fördervorrichtung in einen Sammelbehälter der hinteren Rahmeneinheit transportiert.

Demgegenüber liegt der Erfindung die Aufgabe zugrunde, die Gelenkeinrichtung zur Verbindung der beiden vertikal sowie horizontal gegenseitig verschwenkbaren Rahmeneinheiten sowie die zugehörigen Förderorgane derart auszubilden und anzuordnen, dass mit einem Minimum an Bauteilen ausgekommen werden kann. Diese Aufgabe ist dadurch gelöst worden, dass zumindest ein Lenker als Fördervorrichtung ausgebildet ist und zur Aufnahme des Erntegutes im Bereich der vorderen Rahmeneinheit eine Einlassöffnung und im Bereich des Sammelbehälters mindestens eine Auslassöffnung aufweist. Durch die vorteilhafte Ausbildung der Gelenkeinrichtung, die gleichzeitig teilweise auch als Förderorgan ausgebildet ist, kann mit einem Minimum an Bauteilen ausgekommen werden, da diese nunmehr zwei Funktionen erfüllt und zwar, einmal das Erntegut aus der vorderen Rahmeneinheit in den Sammelbehälter der hinteren Rahmeneinheit zu transportieren. Auf diese Weise kann der Mähdrescher insgesamt wesentlich billiger hergestellt werden als bisher. Dabei kann der als Förderorgan ausgebildete Lenker, der Teil der Gelenkeinrichtung ist, entweder im oberen Bereich der beiden Rahmeneinheiten oder im unteren Bereich der beiden Rahmeneinheiten vorgesehen werden, während der andere Lenker lediglich zur gelenkigen Verbindung der beiden Rahmeneinheiten dient.

In vorteilhafter Weise ist die Fördervorrichtung mit ihrem vorderen Ende mittels eines vertikal verlaufenden Schwenkzapfens an die vordere Rahmeneinheit angeschlossen, wobei die durch den Schwenkzapfen verlaufende Achse und die durch die vordere Gelenkstelle des unteren bzw. oberen Lenkers verlaufende Achse die annähernd vertikal verlaufende Gelenkachse bilden um die die beiden Rahmeneinheiten gegenseitig verschwenkbar sind. Da die beiden Achsen des oberen und unteren Lenkers koaxial zueinander ausgerichtet sind, lässt sich ohne weiteres die hintere Rahmeneinheit gegenüber der vorderen Rahmeneinheit horizontal sowie vertikal schwenken, ohne dass die einzelnen Verbindungteile einer zu grossen Zug- und Druckbelastung unterliegen. Dabei ist es vorteilhaft, dass die Auslassöffnung der Fördervorrichtung vor der Anschlussstelle der Fördervorrichtung an der hinteren Rahmeneinheit liegt. Durch die vorteilhafte Plazierung der Auslassöffnung in dem als Fördervorrichtung ausgebildeten Lenker wird der Sammelbehälter der hinteren Rahmeneinheit gleichmässig bis oben hin befüllt, so dass eine gleichmässige Belastung der Rahmeneinheit über den gesamten Füllvorgang gewährleistet ist. Um eine gute Befüllung des Sammelbehälters zu gewährleisten ist es besonders vorteilhaft, dass die Fördervorrichtung im Bereich der oberen Begrenzung der Rahmeneinheiten vorgesehen ist und in etwa die gesamte Länge der hinteren Rahmeneinheit überspannt. Da die Anschlussstelle der Fördervorrichtung im hinteren Bereich des Sammelbehälters an der Rahmeneinheit vorgesehen ist, wird bei einer Verschwenkung der hinteren Rahmeneinheit um die horizontal verlaufende Achse, die Druck- und Zugbelastung auf den oberen Lenker klein gehalten, da bei einer Verschwenkung um die horizontale Achse der hinteren Rahmeneinheit der seitliche Versatz sich weniger ungünstig auswirkt als wenn der obere Lenker im vorderen Bereich an die Rahmeneinheit angeschlossen wäre. Eine gleichmässige Befüllung des Sammelbehälters erhält man über den gesamten Füllvorgang auch dadurch, dass die Auslassöffnung in etwa mittig im oberen Bereich des Sammelbehälters vorgesehen ist.

Nach einem weiteren Merkmal der Erfindung ist es vorteilhaft, dass die Einlassöffnung der oberen bzw. unteren in etwa horizontal verlaufenden Fördervorrichtung nach oben gerichtet ist und mit einem weiteren, als Fördergebläse oder als Elevatorförderer ausgebildeten Förderorgan in Verbindung steht, das ausgedroschenes Erntegut aus der Dresch- und Trennvorrichtung oder einer nachgeschalteten Reinigungsvorrichtung der Fördervorrichtung zuführt und dass die nach oben gerichtete Einlassöffnung koaxial zur vertikal verlaufenden Achse verläuft. Da die nach oben gerichtete Einlassöffnung der oberen bzw. unteren Fördervorrichtung koaxial zur vorderen Schwenkachse der beiden Rahmeneinheiten verläuft, kann der Anschluss der die Dresch- und Trennvorrichtung mit dem horizontal verlaufenden Förderer verbindenden Fördervorrichtung wesentlich einfacher ausgebildet sein.

In weiterer Ausgestaltung der Fördervorrichtung ist es vorteilhaft, dass sie aus einem zylindrischen, eine Förderschnecke aufweisenden, den oberen bzw. unteren Lenker bildenden Fördergehäuse besteht. Vorteilhaft ist es ausserdem, dass die untere als Lenker ausgebildete Fördervorrichtung mit ihrer Einlassöffnung an einen Förderkanal des Fördergebläses angeschlossen ist, das über eine an das Fördergebläse angeschlossene mit Bezug auf die Fahrtrichtung querverlaufende Förderschnecke mit gereinigtem Erntegut beschickt wird. Ferner ist es vorteilhaft, dass an das Auslassende des Fördergehäuses der unteren Fördervorrichtung ein ansteigendes Fördergehäuse angeschlossen ist, dessen Auslassende sich in den oberen, mittleren Bereich des Sammelbehälters erstreckt.

Damit die hintere Rahmeneinheit gegenüber der vorderen Rahmeneinheit um eine horizontal verlaufende Achse schwenken kann, ist es vorteilhaft, dass im Bereich des Abgabeendes des horizontal verlaufenden Fördergehäuses ein Drehlager vorgesehen ist, in dem das Fördergehäuse horizontal drehbar aufgenommen ist.

Um einen Lenkvorgang für den Mähdrescher auszuführen, ist es vorteilhaft, dass die Lenkzylinder einenends an das Gehäuse der vorderen Rahmeneinheit, anderenends an das Fördergehäuse gelenkig angeschlossen sind. Eine einfache und gute Verbindung erhält man dadurch, dass das Fördergehäuse im Bereich der Einlassöffnung zwei horizontal verlaufende Zapfen aufweist, an die eine Lagergabel mit dem vertikal verlaufenden, koaxial zur Einlassöffnung angeordneten Schwenkzapfen derart angeschlossen ist, dass das Fördergehäuse allseitig verschwenkbar ist.

In der Zeichnung sind zwei Ausführungsbeispiele von zwei über eine Gelenkverbindung verbundenen Rahmeneinheiten eines Mähdreschers nach der Erfindung schematisch dargestellt. Es zeigt:

Fig. 1 eine Seitenansicht eines Mähdreschers mit zwei gelenkig verbundenen Rahmeneinheiten;

Fig. 2 eine Draufsicht des Mähdreschers gemäss Fig. 1;

Fig. 3 einen als Fördervorrichtung ausgebildeten oberen Lenker zur Verbindung der beiden Rahmeneinheiten;

Fig. 4 eine Draufsicht des Mähdreschers gemäss Fig. 1 mit graphischen Angaben über die Bewegung des oberen Teils der hinteren Rahmeneinheit bei langem und kurzem oberen Lenker;

Fig. 5 einen Teilschnitt durch einen unteren Lenker zur Verbindung der beiden Rahmeneinheiten der ebenfalls als Fördervorrichtung ausgebildet ist;

Fig. 6 zwei Lenkzylinder zur Verstellung der beiden Rahmeneinheiten;

Fig. 7 eine Seitenansicht des Mähdreschers mit der in Fig. 5 dargestellten Fördervorrichtung.

In der Zeichnung ist mit 10 die vordere und mit 12 die hintere Rahmeneinheit bezeichnet, die über eine Gelenkvorrichtung verbunden sind, zu der obere und untere Lenker 14 und 16 gehören. Zu der vorderen Rahmeneinheit 10 gehört ein Gehäuse 18, das auf zwei Laufrädern 20 abstützbar ist. Der Mähdrescher wird über eine Verbrennungskraftmaschine 22 angetrieben, die auf der rechten Seite des Gehäuses 18 vorgesehen ist, und die von einem Fahrerstand 24 aus bedienbar ist.

An der vorderen Rahmeneinheit 10 befindet sich eine Erntebergungsvorrichtung 26, über die das Erntegut aufgenommen wird und einer sich in Axialrichtung erstreckenden Dresch- und Trennvorrichtung 28 zugeführt wird. Ausgeschiedenes Korn und Kaff wird einer Reinigungsvorrichtung 30 zugeführt und das Stroh am Ende des Mähdreschers abgegeben. Die Erntebergungsvorrichtung 26, die Dresch- und Trennvorrichtung 28 sowie die Reinigungsvorrichtung 30 befinden sich auf der vorderen Rahmeneinheit 10 im Gehäuse 18 des Mähdreschers.

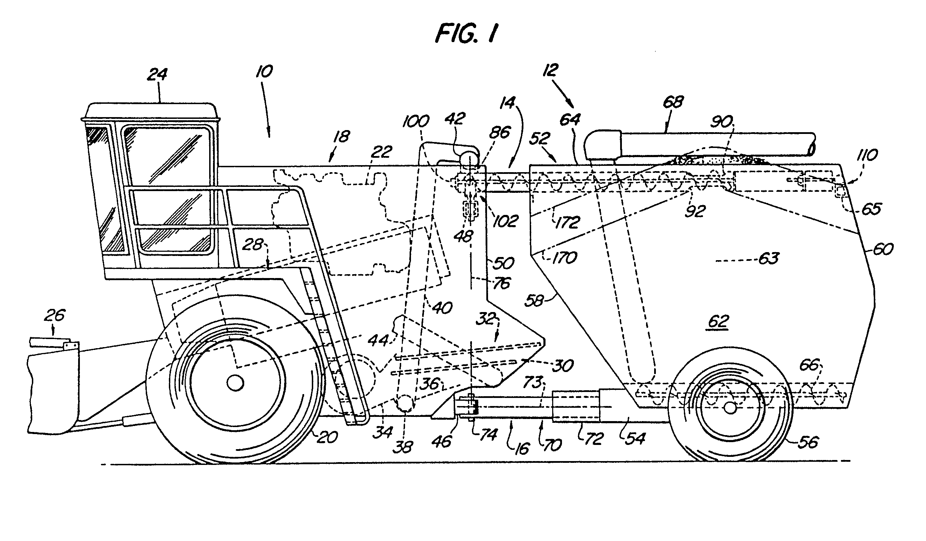

Zu der Reinigungsvorrichtung 30 gehören zwei untereinander angeordnete Reinigungssiebe 32, die über ein Gebläse 34 mit Reinigungsluft beaufschlagt werden. Unterhalb der Reinigungssiebe 32 befindet sich ein Rücklaufboden 36, über den das gereinigte Korn einer Querförderschnecke 38 und dann einem Elevatorförderer 40 zugeführt wird, der das Korn wiederum einer oberen Querförderschnecke 42 zuführt, die das Erntegut einer hinteren, auf der Längsmittelebene liegenden, im hinteren Bereich der vorderen Rahmeneinheit 10 vorgesehenen Stelle zuführt. Eine Rückführung des nur teilweise gereinigten Erntegutes zur Dresch- und Trennvorrichtung 28 erfolgt über einen nur teilweise dargestellten Überkehrelevator 44 (Fig. 1). An der vorderen Rahmeneinheit 10 befindet sich eine starr angeordnete Anhängedeichsel 46, die auf der Längsmittelebene liegt und sich von der Rahmeneinheit 10 nach hinten erstreckt. Die Rahmeneinheit 10 weist ferner einen oberen Querträger 48 auf, der im Bereich der Rückwand 50 am Gehäuse 18 angeordnet ist.

Die hintere Rahmeneinheit 12 weist ebenfalls ein Gehäuse 52 sowie einen zugehörigen Rahmen 54 auf, der auf Laufrädern 56 abstützbar ist. Das Gehäuse 52 besteht aus einer geneigten Vorderwand 58, einer Rückwand 60 sowie gegenüberliegenden Seitenwänden 62, die alle zusammen einen Sammelbehälter 63 bilden. Das Volumen des Sammelbehälters 63 füllt in etwa das gesamte Volumen des Gehäuses 52 der hinteren Rahmeneinheit 12 aus. Die obere Grenze des Sammelbehälters 63 bilden die Kanten 64 der Seitenwände 62. Ein Querträger 65 ist im Bereich der Oberkante der Rückwand 60 angeordnet. Der Sammelbehälter 63 wird über eine am Boden vorgesehene Förderschnecke 66 und eine schwenkbar angeordnete, Förderschnecken aufweisende Entleerungsvorrichtung 68 entleert.

Der untere Lenker 16 ist als Anhängevorrichtung 70 ausgebildet, der mittels einer Dreheinrichtung 72 fest an das hintere Ende des Rahmens 54 der hinteren Rahmeneinheit 12 angeschlossen ist. Die Dreheinrichtung 72 gestattet eine Drehung zwischen der Anhängevorrichtung 70 und dem hinteren Gehäuse 52 um eine in Längsrichtung verlaufende Achse 73. Die Anhängedeichsel 70 ist an die Anhängedeichsel 46 der vorderen Rahmeneinheit 10 mittels eines Kupplungsbolzens 74 angekuppelt, der eine gegenseitige Verschwenkung der beiden Rahmeneinheiten 10 und 12 um eine aufrechte Achse bzw. Gelenkachse 76 ermöglicht und genügend Spielraum bietet um eine Verschwenkung um eine horizontale Querachse zu ermöglichen, die in etwa durch den Kupplungsbolzen 74 verläuft.

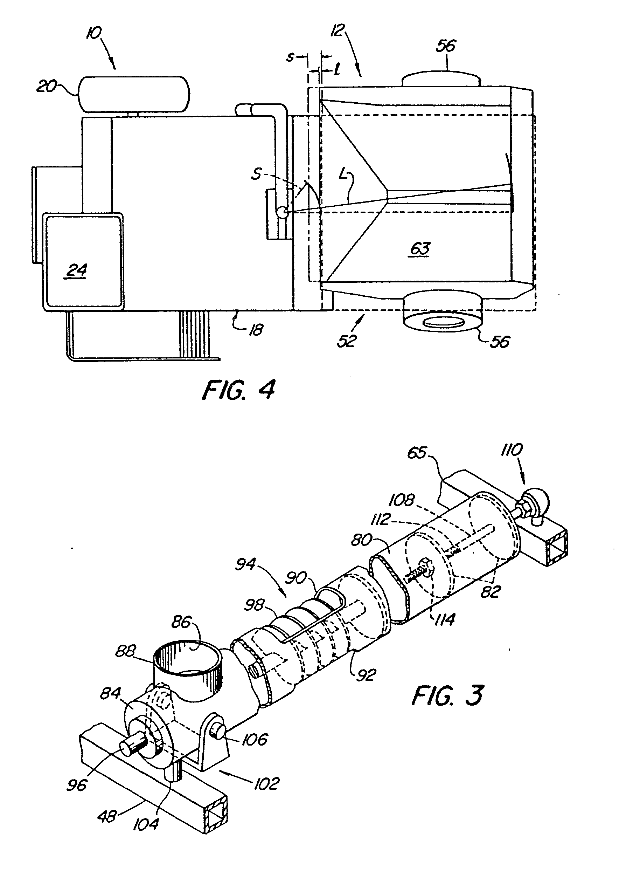

Der obere Lenker 14 ist in Fig. 1 und insbesondere in Fig. 3 veranschaulicht. Der Lenker 14 besteht aus einem als Fördergehäuse 80 ausgebildeten Rohr, dessen hinteres Ende mittels einer oder zwei Platten 82 und dessen vorderes Ende mittels einer Platte 84 verschlossen ist. Am vorderen Ende des Fördergehäuses 80 befindet sich ein nach oben zeigender Einlassstutzen 88 mit einer nach oben gerichteten Einlassöffnung 86. Im Bereich des hinteren Endes des Fördergehäuses 80, unmittelbar über dem Zentrum des Sammelbehälters 63 befinden sich zwei gegenüberliegende Auslassöffnungen 90 und 92. Das Fördergehäuse 80 enthält eine auf einer Welle 96 angeordnete Förderschnecke 94 mit einer Schneckenwendel 98, die sich von einem stromaufwärtsliegenden Ende im Bereich der Einlassöffnung 86 in den Bereich der Auslassöffnungen 90 und 92 erstreckt. Ein Hydromotor 100 (Fig. 1) ist an das vordere Ende der Welle 96 angeschlossen und treibt die Förderschnecke 94 an.

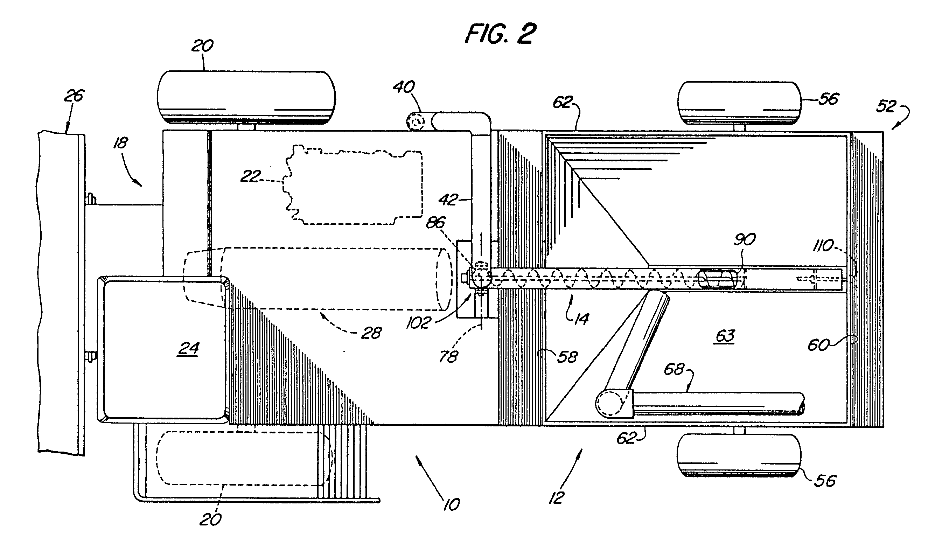

Der Gelenkmittelpunkt des oberen Lenkers 14 an der vorderen Rahmeneinheit 10 wird durch eine Drehzapfeneinrichtung 102 gebildet, die aus einem vertikal verlaufenden, am Querträger 48 vorgesehenen Schwenkzapfen 104 besteht und oberhalb des Querträgers 48 eine horizontale Verschwenkung des Lenkers 14 gestattet. Die Drehzapfeneinrichtung 102 besteht ferner aus zwei koaxial gegenüberliegenden, am Fördergehäuse angeordneten Zapfen 106, die in einer am Schwenkzapfen 104 angeschlossenen gabelförmigen Halterung aufgenommen sind. Die Drehzapfeneinrichtung 102 ermöglicht eine Verschwenkung um eine aufrechte und eine querverlaufende Achse, die einander schneiden und somit den Gelenkmittelpunkt bilden. Das hintere Ende des Fördergehäuses 80 weist zum Anschluss an die Rahmeneinheit 12 eine Schwenkachse 108 auf, die koaxial zum Fördergehäuse 80 in den Platten 82 aufgenommen ist und an ihrem äusseren hinteren Ende eine Kugelgelenkeinrichtung 110 trägt, die auf dem oberen, hinteren Querträger 65 lagert. Im Bereich der vorderen Platte 82 weist die Schwenkachse 108 einen Gewindeteil 112 auf, auf dem zwischen Muttern 114 die vordere Platte 82 eingeklemmt ist. Durch Verstellen der Platte 82 auf der Schwenkachse 108 kann die Gesamtlänge des oberen Lenkers 14 verändert werden. Die hier beschriebene Kupplungsvorrichtung zwischen den beiden Rahmeneinheiten 10 und 12 ermöglicht eine gegenseitige Verschwenkung der beiden Rahmeneinheiten um die in Längsrichtung verlaufende Schwenkachse 73, die aufrechtstehende Achse 76 sowie die Querachse 78 (Fig. 2), die durch die Deichsel 46 und den Kupplungsbolzen 74 verläuft. Der Schnittpunkt der Querachse 78 mit der Schwenkachse 73 kann auch als Gelenkmittelpunkt bezeichnet werden.

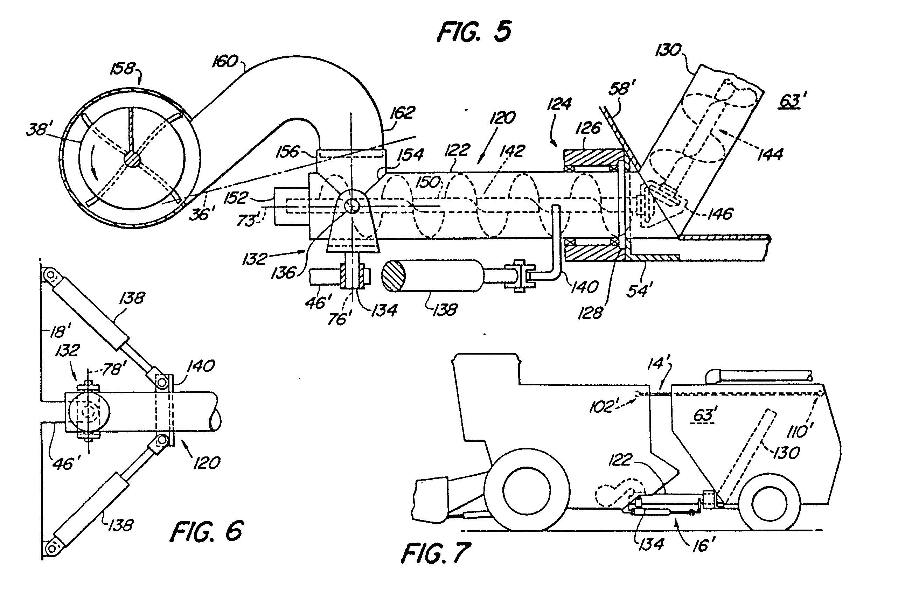

In einem anderen Ausführungsbeispiel gemäss Fig. 7 ist der obere Lenker 14' als einfaches Gestänge ausgebildet, während der untere Lenker 16' gemäss Fig. 5 zur Verbindung der beiden Rahmeneinheiten 10 und 12 als Fördervorrichtung 120 ausgebildet ist. Die als Fördervorrichtung 120 ausgebildete Anhängevorrichtung weist ein Fördergehäuse 122 auf, das drehbar in einer Drehlagereinrichtung 124 lagert, zu der ein Drehlager 126 gehört, das starr mit dem Rahmen 54' der hinteren Rahmeneinheit 12 verbunden ist. Ein Ringflansch 128 hält das Fördergehäuse 122 in der Drehlagereinrichtung 124. Ein geneigt verlaufendes Fördergehäuse 130 erstreckt sich nach hinten und nach oben in den Sammelbehälter 63 und steht mit dem horizontal verlaufenden Fördergehäuse 122 in Verbindung.

Das Fördergehäuse 122 verbindet die hintere Rahmeneinheit 12 mit der Deichsel 46' der vorderen Rahmeneinheit. Ein vertikal verlaufender Gelenkbolzen 134 und horizontal verlaufende Gelenkbolzen 136 ermöglichen eine Schwenkbewegung der hinteren Rahmeneinheit gegenüber der vorderen Rahmeneinheit um eine aufrechtstehende Achse 76' und eine quer verlaufende Achse 78' (Fig. 5, 6) während die Drehlagereinrichtung 124 eine Drehbewegung zwischen der vorderen und hinteren Rahmeneinheit 10 und 12 um eine in Fahrtrichtung verlaufende Achse 73' ermöglicht. Zwei Lenkzylinder 138 (siehe Fig. 6) sind einenends an der Rahmeneinheit 10 anderenends an eine mit der Fördervorrichtung 120 fest verbundenen Halterung 140 angeschlossen und dienen zur Lenkung des Mähdreschers. Die Lenkzylinder 138 werden über ein in der Zeichnung nicht dargestelltes Hydrauliksystem entsprechend mit Druckmittel versorgt. Eine ähnliche Lenkvorrichtung kann auch für einen Mähdrescher gemäss Fig. 1 und 2 verwendet werden. Die entsprechenden Anschlüsse der Lenkzylinder 138 an der Rahmeneinheit 10 sowie an der Halterung 140 können als Kugelgelenke ausgebildet sein, die eine oszillierende Bewegung der beiden Rahmeneinheiten 10 und 12 sowie die Knicklenkung des Mähdreschers zulassen. Gemäss Fig. 5 ist der untere Lenker 16 bzw. die Fördervorrichtung 120 durch miteinander verbundene Förderschnecken 142, 144 vervollständigt. Die Förderschnecke 142 verläuft horizontal und die sich daran anschliessende Förderschnecke 144 geneigt. Die beiden Förderschnecken 142, 144 sind über Kegelräder 146 in einem Getriebegehäuse antriebsverbunden. Die Förderschnecke 142 weist eine Welle 150 auf, die sich in dem Fördergehäuse 122 der Fördervorrichtung 120 nach vorne erstreckt und mit einem Hydromotor 152 antriebsverbunden ist. An eine kreisförmige, nach oben gerichtete Einlassöffnung 154 des Fördergehäuses 122 ist ein Einlassstutzen 156 angeschlossen, der zur Weiterleitung von Erntegut in das Fördergehäuse 122 dient. Der Einlassstutzen 156 verläuft vertikal und koaxial zu der Achse 76′, die durch den Bolzen 134 der Gelenkvorrichtung 132 gebildet wird. Somit behält die in dem Einlassstutzen 156 vorgesehene Öffnung 154 bei einer horizontalen Schwenkbewegung des Lenkers 16′ im wesentlichen ihre Lage bei, die zur Aufnahme des aus einem Fördergebläse 158 kommenden Erntegutes dient. Das Fördergebläse 158 ist koaxial zu einer Querförderschnecke 38′ ausgerichtet und weist einen Förderkanal 160 mit einer Auslassöffnung 162 zum Anschluss an den Einlassstutzen 156 auf.

Im Arbeitseinsatz (Fig. 5 und 7) fördert die Querförderschnecke 38′ das Korn zum Fördergebläse 158 und nicht, wie bisher üblich, direkt zu einem Elevatorförderer. Der Förderkanal 160 leitet das von dem Fördergebläse 158 abgegebene Erntegut in die Einlassöffnung 154 der Fördervorrichtung 120. Die Förderschnecken 142 und 144 bewegen das Korn dann in einen Sammelbehälter 63′. Das Korn wird am oberen Ende des Fördergehäuses 130 fontänenartig in das Zentrum des Sammelbehälters (Fig. 7) abgegeben.

Arbeitet der Mähdrescher auf unebenem Gelände, so findet eine oszillierende Bewegung zwischen der vorderen Rahmeneinheit 10 und der hinteren Rahmeneinheit 12 statt, wobei ein seitlicher Versatz des oberen Teils der hinteren Rahmeneinheit 12 (siehe Fig. 4) gegenüber der vorderen Rahmeneinheit 10 stattfindet. Fig. 4 zeigt einmal den seitlichen Versatz, die Abstandsveränderung zwischen den Rahmeneinheiten 10, 12 und den Knicklenkereffekt für einen kurzen, oberen Lenker S und einen langen, oberen Lenker L. Der Versatz des oberen Teils der hinteren Rahmeneinheit 12 erfolgt seitlich und etwas nach vorne. Bei Verwendung eines kurzen, oberen Lenkers S ist der Versatz wesentlich höher, als bei Verwendung des erfindungsgemässen längeren Lenkers L. Bei Verwendung des kurzen Lenkers S ist der Versatz nach vorne durch den Buchstaben s und bei Verwendung eines Lenkers L ist der Versatz durch den Buchstaben l gekennzeichnet. Bei Verwendung eines relativ grossen Lenkers wird bei Fahrten auf unebenem Gelände in vorteilhafter Weise gewährleistet, dass der Abstand zwischen den oberen Kanten der beiden Rahmeneinheiten 10 und 12 sich nicht wesentlich auswirkt, wie das bei Verwendung eines kurzen Lenkers der Fall wäre. Somit wird bei einer oszillierenden Bewegung zwischen den beiden Rahmeneinheiten 10, 12 der maximal notwendige Abstand zwischen den oberen Kanten der beiden Rahmeneinheiten 10 und 12 beibehalten. Durch Veränderung der wirksamen Länge des oberen Lenkers 14 kann dieser Abstand beeinflusst werden. Auf diese Weise kann bei Verwendung eines langen, oberen Lenkers 14 der Minimalabstand zwischen den beiden Rahmeneinheiten 10, 12 kleiner gewählt werden als bei Verwendung eines kurzen Lenkers, auch dann, wenn von einer relativ grossen, oszillierenden Bewegung ausgegangen wird.

Wie aus Fig. 1 hervorgeht (ähnlich auch bei Fig. 7), ist der Abstand zwischen den Anschlussstellen des oberen Lenkers 14 (Drehzapfeneinrichtung 102, 102′ und Kugelgelenkeinrichtung 110, 110′) grösser als der vertikale Abstand zwischen den Gelenkpunkten der beiden Rahmeneinheiten 10 und 12 (Kupplungsbolzen 74, 74′ und Drehzapfeneinrichtung 102, 102′).

Der Abstand zwischen den Anschlussstellen der oberen und unteren Lenker 14 und 16 der beiden Rahmeneinheiten 10 und 12, der in etwa der Höhe des Fahrzeuges entspricht sowie die Verwendung der horizontal verlaufenden Schwenkachse 73 bzw. 73′ hat zahlreiche Vorteile. Die Schwenkachse 73 bzw. 73′ liegt dicht über dem Boden, so dass die Hebelwirkungen und die inneren Kräfte, die auf Grund des seitlichen Versatzes der Laufräder während der oszillierenden Bewegung der beiden Rahmeneinheiten 10 und 12 auftreten, auf ein Minimum reduziert werden können. Die Kräfte, die auf die Anhängevorrichtung bzw. Fördervorrichtung 120 einwirken, sind relativ klein, da auch die Hebelwirkungen auf Grund des grossen Abstandes zwischen den Anschlussstellen der Lenker gering sind. Der obere Lenker 14 ist so angeordnet, dass er mit anderen Teilen des Mähdreschers nicht kollidiert und aus Vorstehendem geht hervor, dass der Anschluss des hinteren Endes des oberen Lenkers 14 an die hintere Rahmeneinheit 12 besonders vorteilhaft ist. Es besteht ausserdem ein ausreichender Abstand zwischen dem oberen Lenker 14 und den oberen Teilen der Rahmeneinheit 12, so dass der obere Lenker 14 mit keinem der Teile der hinteren Rahmeneinheit kollidiert.

Der maximale vertikale Abstand der einzelnen Gelenkvorrichtungsteile führt nicht nur zu kleinen Kräften in den Lenkern 14 und 16, sondern bei einer oszillierenden Bewegung der hinteren Rahmeneinheit 12 gegenüber der vorderen Rahmeneinheit 10 um den unteren Lenker 16′ zu einem grösseren Versatz im oberen Bereich der Rahmeneinheiten 12. Die Verwendung eines langen oberen Lenkers 14 nach der Erfindung ermöglicht eine grössere oszillierende Bewegung zwischen der vorderen und hinteren Rahmeneinheit 10 und 12, da der Knicklenkereffekt des relativ langen, oberen Lenkers 14 klein ist. Befindet sich die vordere Gelenkstelle des oberen Lenkers 14 auf der gleichen vertikalen Ebene wie die untere Gelenkstelle, so verläuft die Gelenkachse 76, 76' aufrecht, und es findet beim Lenkvorgang keine Querneigung der hinteren Rahmeneinheit 12 gegenüber der vorderen Rahmeneinheit 10 statt.

Durch Verwendung des oberen Lenkers 14 kann mit einem Minimum an Bauteilen zur Verbindung der beiden Rahmeneinheiten 10, 12 ausgekommen werden, insbesondere dann, wenn der in etwa horizontal verlaufende Lenker auf der Längsmittelachse des Mähdreschers verläuft und relativ einfache Gelenke zum Anschluss der gegenüberliegenden Enden des Lenkers an der vorderen und hinteren Rahmeneinheit 10 und 12 benötigt. Durch Anschluss des entsprechenden Endes des oberen Lenkers 14 im Bereich des jeweiligen hinteren Teiles der vorderen und hinteren Rahmeneinheit 12 ist der vordere Teil der Rahmeneinheit 12 frei für andere notwendige Ausrüstungsteile des Mähdreschers. Ferner wird hierdurch der Zugang und die Wartungsarbeit an dem Mähdrescher bzw. den einzelnen Teilen des Mähdreschers sehr erleichtert. Wird beispielsweise das hintere Ende des oberen Lenkers 14 an einer Stelle hinter der Achse der Laufräder 56 an die hintere Rahmeneinheit 12 angeschlossen, beispielsweise an die Rückwand der hinteren Rahmeneinheit, so werden dadurch die Fahreigenschaften und Lenkvorgänge des Mähdreschers weiterhin verbessert, ohne dass hierzu der notwendige Platz für andere Bauteile des Mähdreschers zu stark beansprucht wird.

Der einmal als Verbindungselement und zum anderen als Fördergehäuse ausgebildete obere Lenker 14 (Fig. 1 und 2) ist so angeordnet, dass seine Längsachse auf der Längsmittelebene des Mähdreschers verläuft. Dies trägt zur Stabilisierung des Mähdreschers bei und ermöglicht auf einfache Weise eine zentrale Beschickung des hinteren Sammelbehälters 63. Eine Schwenkbewegung der einen oder anderen Rahmeneinheit 10 bzw. 12 um die horizontal verlaufende Achse 73 ruft auch eine gewisse Schwenkbewegung des oberen Lenkers 14 hervor und infolgedessen eine Bewegung der Öffnungen 90 und 92. Derartige seitliche Bewegungen der Öffnungen 90 und 92 sind relativ gering. Da eine Auslenkung der oberen Rahmeneinheit in beiden Richtungen erfolgt, wird Erntegut einmal auf der einen Seite und zum anderen auf der anderen Seite des im Sammelbehälter 63 befindlichen Schüttkegels abgegeben, so dass somit eine gleichmässige, zentrale Beschickung des Sammelbehälters 63 gewährleistet bleibt. Durch die beiden länglichen Öffnungen 90 und 92 gemäss Fig. 1 wird der Sammelbehälter 63 mit einem relativ schwach ansteigenden Schüttkegel 170 befüllt bis die Öffnung 92 teilweise vom Erntegut umgeben ist (siehe Fig. 1). Die weitere Füllung des Sammelbehälters erfolgt über die Öffnung 90, und zwar so lange, bis sich der Schüttkegel 172 gebildet hat.

Aus Vorstehendem geht hervor, dass durch die Verwendung des oberen bzw. unteren, als Fördervorrichtung 120 ausgebildeten Lenkers 14 bzw. 16 für einen Mähdrescher mit Knicklenkung ein einfacherer Transport des Erntegutes zwischen der vorderen Rahmeneinheit 10 und der hinteren Rahmeneinheit 12 gewährleistet wird. Die Verwendung des als Fördervorrichtung ausgebildeten Lenkers 14 bzw. 16 beeinträchtigt darüber hinaus nicht ihre Aufgabe zur Verbindung der beiden Rahmeneinheiten 10, 12. Die Fahreigenschaften und die Lenkung des Mähdreschers werden auch dann nicht beeinträchtigt, wenn die Lenker als Förderorgane eingesetzt sind. Durch Plazierung der Einlassöffnungen 86 auf der Schwenkachse 76 der beiden Rahmeneinheiten 10 und 12 kann auf zusätzliche Förderelemente zur Ermöglichung einer Schwenkbewegung zwischen den beiden Rahmeneinheiten verzichtet werden, die sonst notwendig wären, wenn die Einlassöffnung an anderer Stelle plaziert wäre. Die relativ einfach ausgebildete Querförderschnecke 42 (Fig. 1) oder das Fördergebläse 158 mit dem Förderkanal 160 (Fig. 5) in Verbindung mit der Einlassöffnung 86 bzw. 154 sind vorgesehen, um das Fördergehäuse 80 bzw. 122 zu beschicken. Die Aufnahme des Erntegutes in dem Fördergehäuse 80 bzw. 122 wird nicht wesentlich durch die Relativbewegungen zwischen den beiden Rahmeneinheiten 10 und 12 beeinträchtigt, beispielsweise bei einer Schwenkbewegung einer Rahmeneinheit 10 bzw. 12 um eine horizontal verlaufende Achse bzw. beim Lenkvorgang des Mähdreschers. Ein besonderer Vorteil des unteren als Fördervorrichtung ausgebildeten Lenkers 16' (siehe Fig. 5 und 7) wird in einer Vereinfachung der Konstruktion und in einer Verminderung der Kosten gesehen, da auf den Elevatorförderer 40 und die zugehörige Querförderschnecke 42 verzichtet werden kann. An Stelle dieser Förderorgane tritt das Fördergebläse 180 mit dem Förderkanal 160 sowie das Fördergehäuse 130 mit der Förderschnecke 144.

Keines der beiden Fördersysteme macht zur Befüllung des Sammelbehälters 63 bzw. 63' zusätzliche Nivelierungselemente erforderlich. Nach der Befüllungsvorrichtung gemäss Fig. 1 sind lediglich zwei Auslassöffnungen 90 und 92 im Fördergehäuse 80 des oberen Lenkers 14 vorgesehen. Diese Auslassöffnungen können durch zusätzliche Auslassöffnungen vermehrt werden bzw. können diese so verlängert werden, dass auch längere oder breitere Sammelbehälter ohne weiteres befüllt werden können.

Durch die vorteilhafte Anordnung der Dresch- und Trennvorrichtung 28 auf der vorderen Rahmeneinheit 10 kann auch die Reinigungsvorrichtung 30 auf der vorderen Rahmeneinheit plaziert werden, so dass der Platz in der hinteren Rahmeneinheit 12 hauptsächlich für den Sammelbehälter 63 bzw. 63' zur Verfügung steht. Der einzige bewegliche Teil auf der hinteren Rahmeneinheit 12 ist die Entleerungsschnecke 68. Durch die relativ einfache Gestaltung der hinteren Rahmeneinheit 12 können die Herstellungskosten niedrig gehalten werden. Ausserdem besteht hierdurch die Möglichkeit, Rahmeneinheiten für Sammelbehälter mit unterschiedlichem Fassungsvermögen für einen Mähdreschertyp anzubieten.

Der in Fig. 5 und 7 vorgesehene, als Fördervorrichtung ausgebildete Lenker 16' ist ohne weiteres für eine Knicklenkerverbindung zweier Rahmeneinheiten verwendbar, die insgesamt aus dem oberen Lenker 14' sowie dem unteren Lenker 16' besteht.

## Patentansprüche

1. Mähdrescher mit zwei über eine Lenkzylinder (138) aufweisende Gelenkeinrichtung verbundenen, je eine Laufradachse aufweisenden Rahmeneinheiten (10, 12), wobei die Gelenkeinrichtung aus mindestens einem unteren und mindestens einem mit Abstand zum unteren Lenker angeordneten oberen Lenker (14, 16) gebildet ist, wobei jeder Lenker an einem Ende an der einen Rahmeneinheit und an dem anderen Ende an der anderen Rahmeneinheit derart gelenkig angeschlossen ist, dass die Rahmeneinheiten um eine vertikale (76) und eine in etwa horizontal verlaufende Achse (73) gegenseitig verstellbar sind, wobei auf der vorderen Rahmeneinheit (10) eine Dresch- und Trennvorrichtung (28) und auf der hinteren Rahmeneinheit (12) ein Sammelbehälter (63) angeordnet ist und das aus der Dresch- und Trennvorrichtung (28) der vorderen Rahmeneinheit abgegebene Erntegut über eine Fördervorrichtung zu einem Sammelbehälter (63) der hinteren Rahmeneinheit geleitet wird, dadurch gekennzeichnet, dass zumindest ein Lenker (14 oder 16) als Fördervorrichtung ausgebildet ist und zur Aufnahme des Erntegutes im Bereich der vorderen Rahmeneinheit (10) eine Einlassöffnung und im Bereich des Sammelbehälters (63) mindestens eine Auslassöffnung (90, 92) aufweist.

2. Mähdrescher nach Anspruch 1, dadurch gekennzeichnet, dass die Fördervorrichtung mit ihrem vorderen Ende mittels eines vertikal verlaufenden Schwenkzapfens (104) an die vordere Rahmeneinheit (10) angeschlossen ist, wobei die durch den Schwenkzapfen (104) verlaufende Achse und die durch die vordere Gelenkstelle des unteren bzw. oberen Lenkers (14, 16) verlaufende Achse eine Gelenkachse (76) bilden um die die beiden Rahmeneinheiten (10, 12) gegenseitig verschwenkbar sind.

3. Mähdrescher nach einem oder mehreren der vorhergehenden Ansprüche, dadurch gekennzeichnet, dass die Auslassöffnung (90 bzw. 92) der Fördervorrichtung vor der Anschlussstelle der Fördervorrichtung an der hinteren Rahmeneinheit (12) liegt.

4. Mähdrescher nach einem oder mehreren der vorhergehenden Ansprüche, dadurch gekennzeichnet, dass die Fördervorrichtung im Bereich der oberen Begrenzung der Rahmeneinheiten (10, 12) vorgesehen ist und in etwa die gesamte Länge der hinteren Rahmeneinheit (12) überspannt.

5. Mähdrescher nach Anspruch 4, dadurch gekennzeichnet, dass die Auslassöffnung (90 bzw. 92) in etwa mittig im oberen Bereich des Sammelbehälters (63) vorgesehen ist.

6. Mähdrescher nach einem oder mehreren der vorhergehenden Ansprüche, dadurch gekennzeichnet, dass die Einlassöffnung (86) der oberen bzw. unteren in etwa horizontal verlaufenden Fördervorrichtung nach oben gerichtet ist und mit einem weiteren, als Fördergebläse (158) oder als Elevatorförderer (40) ausgebildeten Förderorgan in Verbindung steht, das ausgedroschenes Erntegut aus der Dresch- und Trennvorrichtung (28) oder einer nachgeschalteten Reinigungsvorrichtung (30) der Fördervorrichtung zuführt.

7. Mähdrescher nach den Ansprüchen 1 und 6, dadurch gekennzeichnet, dass die nach oben gerichtete Einlassöffnung (86) koaxial zur vertikal verlaufenden Achse (76) verläuft.

8. Mähdrescher nach einem oder mehreren der vorhergehenden Ansprüche, dadurch gekennzeichnet, dass die Fördervorrichtung aus einem zylindrischen, eine Förderschnecke (94, 142) aufweisenden, den oberen bzw. unteren Lenker (14, 16) bildenden Fördergehäuse (80, 122) besteht.

9. Mähdrescher nach einem oder mehreren der vorhergehenden Ansprüche, dadurch gekennzeichnet, dass die untere als Lenker (16) ausgebildete Fördervorrichtung mit ihrer Einlassöffnung an einen Förderkanal (160) des Fördergebläses (158) angeschlossen ist, das über eine an das Fördergebläse angeschlossene mit Bezug auf die Fahrtrichtung querverlaufende Förderschnecke (38') mit gereinigtem Erntegut beschickt wird.

10. Mähdrescher nach den Ansprüchen 1 und 9, dadurch gekennzeichnet, dass das Auslassende des Fördergehäuses (122) der unteren Fördervorrichtung an ein ansteigendes Fördergehäuse (130) angeschlossen ist, dessen Auslassende sich in den oberen, mittleren Bereich des Sammelbehälters (63') erstreckt.

11. Mähdrescher nach den Ansprüchen 9 und 10, dadurch gekennzeichnet, dass im Bereich des Abgabeendes des horizontal verlaufenden Fördergehäuses ein Drehlager vorgesehen ist, in dem das Fördergehäuse horizontal drehbar aufgenommen ist.

12. Mähdrescher nach einem oder mehreren der vorhergehenden Ansprüche, dadurch gekennzeichnet, dass die Lenkzylinder (138) einenends an das Gehäuse (18) der vorderen Rahmeneinheit (10) anderenends an das Fördergehäuse (122) gelenkig angeschlossen sind.

13. Mähdrescher nach einem oder mehreren der vorhergehenden Ansprüche, dadurch gekennzeichnet, dass das Fördergehäuse (80, 122) im Bereich der Einlassöffnung (86) zwei horizontal verlaufende Zapfen (106) aufweist, an die eine Lagergabel mit dem vertikal verlaufenden, koaxial zur Einlassöffnung angeordneten Schwenkzapfen (104) derart angeschlossen ist, dass das Fördergehäuse allseitig verschwenkbar ist.

## Claims

1. A combine harvester comprising two frame units (10, 12) which each have a support wheel axle and which are connected by way of a steering arrangement having steering cylinders (138), wherein the steering arrangement is formed from at least one lower and at least one upper link (14, 16) which is disposed at a spacing from the lower link, wherein each link is pivotally connected at one end to the one frame unit and at the other end to the other frame unit in such a way that the frame units are displaceable relative to each other about a vertical axis (76) and a substantially horizontally extending axis (73), wherein a threshing and separating apparatus (28) is arranged on the front frame unit (10) and a collecting container (63) is arranged on the rear frame unit (12) and the crop material which is discharged from the threshing and separating apparatus (28) of the front frame unit is passed by way of a conveyor device to a collecting container (63) on the rear frame unit, characterised in that at least one link (14 or 16) is formed as a conveyor device and has an inlet opening for receiving the crop material in the region of the front frame unit (10) and at least one outlet opening (90, 92) in the region of the collecting container (63).

2. A combine harvester according to claim 1 characterised in that the conveyor device is connected with its front end to the front frame unit (10) by means of a vertically extending pivot pin (104) wherein the axis passing through the pivot pin (104) and the axis passing through the front pivot point of the lower and upper links (14, 16) respectively form a pivot axis (76) about which the two frame units (10, 12) are pivotable relative to each other.

3. A combine harvester according to one or more of the preceding claims characterised in that the outlet opening (90 or 92) of the conveyor device is arranged in front of the point of connection of the conveyor device on the rear frame unit (12).

4. A combine harvester according to one or more of the preceding claims characterised in that the conveyor device is provided in the region of the upper boundary of the frame units (10, 12) and extends approximately over the entire length of the rear frame unit (12).

5. A combine harvester according to claim 4 characterised in that the outlet opening (90 or 92) is disposed approximately centrally in the upper region of the collecting container (63).

6. A combine harvester according to one or more of the preceding claims characterised in that the inlet opening (86) of the upper or lower substantially horizontally extending conveyor device is directed upwardly and communicates with a further conveyor member which is in the form of a conveyor fan (158) or an elevator conveyor (40) and which feeds threshed-out crop material from the threshing and separating apparatus (28) or a downstream-disposed cleaning apparatus (30) to the conveyor device.

7. A combine harvester according to claims 1 and 6 characterised in that the upwardly directed inlet opening (86) extends coaxially with respect to the vertically extending axis (76).

8. A combine harvester according to one or more of the preceding claims characterised in that the conveyor device comprises a cylindrical conveyor housing (80, 122) which has a conveyor screw (94, 142) and which forms the upper or lower link (14, 16).

9. A combine harvester according to one or more of the preceding claims characterised in that the lower conveyor device which is formed as the link (16) is connected with its inlet opening to a conveyor passage (160) of the conveyor fan (158) which is charged with cleaned crop material by way of a conveyor screw (38') which is connected to the conveyor fan and which extends transversely with respect to the direction of travel.

10. A combine harvester according to claims 1 and 9 characterised in that the outlet end of the conveyor housing (122) of the lower conveyor device is connected to a rising conveyor housing (130) whose outlet end extends into the upper middle region of the collecting container (63').

11. A combine harvester according to claims 9 and 10 characterised in that disposed in the region of the discharge end of the horizontally extending conveyor housing is a rotary bearing in which the conveyor housing is horizontally rotatably accommodated.

12. A combine harvester according to one or more of the preceding claims characterised in that the steering cylinders (138) are pivotally connected at one end to the housing (18) of the front frame unit (10) and at the other end to the conveyor housing (122).

13. A combine harvester according to one or more of the preceding claims characterised in that in the region of the inlet opening (86) the conveyor housing (80, 122) has two horizontally extending trunnions (106) to which a mounting fork having the vertically extending pivot pin (104) which is coaxially arranged with respect to the inlet opening is connected in such a way that the conveyor housing is pivotable in all directions.

**Revendications**

1. Moissonneuse-batteuse comportant deux parties de châssis (10, 12) reliées entre elles par un dispositif d'articulation comprenant un cylindre de direction (138) et comportant chacune un essieu muni de roues porteuses, le dispositif d'articulation étant formé par au moins une bielle de direction inférieure (16) et au moins une bielle de direction supérieure (14) écartée de la bielle de direction inférieure, chaque bielle de direction étant raccordée par une extrémité à une partie de châssis et par l'autre extrémité à l'autre partie de châssis de façon telle que les parties de châssis soient déplaçables l'une par rapport à l'autre autour d'un axe vertical (76) et d'un axe s'étendant sensiblement horizontalement (73), un dispositif de battage et de séparation (28) étant monté sur la partie de châssis avant (10), tandis qu'un réservoir formant trémie (63) est disposé sur la partie de châssis arrière (12), les produits de récolte déchargés à partir du dispositif de battage et de séparation (28) de la partie de châssis avant étant acheminés par l'intermédiaire d'un dispositif transporteur jusqu'à une trémie (63) de la partie de châssis arrière, caractérisée en ce qu'au moins une bielle (14 ou 16) est agencée à la manière d'un dispositif transporteur et comporte pour la réception des produits de récolte, dans la zone de la partie de châssis avant (10), un orifice d'entrée et, dans la zone de la trémie (63), au moins un orifice de sortie (90, 92).

2. Moissonneuse-batteuse suivant la revendication 1, caractérisée en ce que le dispositif transporteur est raccordé par son extrémité avant à la partie de châssis avant (10) au moyen d'un pivot orienté verticalement (104), l'axe passant par le pivot (104) et l'axe passant par le point d'articulation avant de la bielle de direction inférieure ou supérieure (14, 16) formant un axe d'articulation (76) autour duquel les deux parties de châssis (10, 12) peuvent pivoter l'une par rapport à l'autre.

3. Moissonneuse-batteuse suivant une ou plusieurs des revendications précédentes, caractérisée en ce que l'orifice de sortie (90, 92) du dispositif transporteur se trouve en avant du point de raccordement du dispositif transporteur à la partie de châssis arrière (12).

4. Moissonneuse-batteuse suivant une ou plusieurs des revendications précédentes, caractérisée en ce que le dispositif transporteur est prévu au voisinage de la limite supérieure des parties de châssis (10, 12) et chevauche sensiblement la totalité de la longueur de la partie de châssis arrière (12).

5. Moissonneuse-batteuse suivant la revendication 4, caractérisée en ce que l'orifice de sortie (90 ou 92) est prévu sensiblement au milieu de la zone supérieure du réservoir formant trémie (63).

6. Moissonneuse-batteuse suivant une ou plusieurs des revendications précédentes, caractérisée en ce que l'orifice d'entrée (86) du dispositif transporteur supérieur ou inférieur, s'étendant en principe horizontalement, est orienté vers le haut et est en communication avec un autre organe transporteur se présentant sous la forme d'un ventilateur de transport (158) ou bien d'un transporteur-élévateur (40), cet autre organe transporteur amenant les produits de récolte battus, séparés de la paille, provenant du dispositif de battage et de séparation (28) ou d'un dispositif de nettoyage (30) prévu en avant, au dispositif transporteur.

7. Moissonneuse-batteuse suivant les revendications 1 et 6, carctérisée en ce que l'orifice d'entrée (86) orienté vers le haut s'étend coaxialement à l'axe orienté verticalement (76).

8. Moissonneuse-batteuse suivant une ou plusieurs des revendications précédentes, caractérisée en ce que le dispositif transporteur est constitué par un carter ou une gaine de transport cylindrique (80, 122) comportant une vis transporteuse (94, 142) et formant la bielle de direction supérieure ou inférieure (14, 16).

9. Moissonneuse-batteuse suivant une ou plusieurs des revendications précédentes, caractérisée en ce que le dispositif transporteur inférieur, se présentant sous la forme d'une bielle de direction (16), est raccordé par son orifice d'entrée à un canal de transport (160) du ventilateur (158), qui est alimenté en produits de récolte nettoyés par l'intermédiaire d'une vis transporteuse (38') raccordée au ventilateur et s'étendant transversalement par rapport à la direction de marche.

10. Moissonneuse-batteuse suivant les revendications 1 et 9, caractérisée en ce que l'extrémité de sortie du carter ou de la gaine de transport (122) du dispositif transporteur inférieur est raccordée à une gaine de transport ascendante (130) dont l'orifice de sortie s'étend dans la partie supérieure médiane du réservoir formant trémie (63').

11. Moissonneuse-batteuse suivant les revendications 9 et 10, caractérisée en ce qu'il est prévu, dans la zone voisine de l'extrémité de sortie de la gaine de transport s'étendant horizontalement, un palier de pivotement dans lequel la gaine de transport peut tourner horizontalement.

12. Moissonneuse-batteuse suivant une ou plusieurs des revendications précédentes, caractérisée en ce que les cylindres de direction (138) sont reliés à articulation par une extrémité au corps ou carter (18) de la partie de châssis avant (10) et par l'autre extrémité à la gaine de transport (122).

13. Moissonneuse-batteuse suivant une ou plusieurs des revendications précédentes, caractérisée en ce que la gaine de transport (80, 122) présente, au voisinage de l'orifice d'entrée (86), deux tourillons orientés horizontalement (106), auxquels une chape de montage munie du pivot vertical (104) disposé coaxialement à l'orifice d'entrée est reliée de telle sorte que la gaine de transport puisse pivoter dans toutes les directions.

FIG. 1

FIG. 2

FIG. 4

FIG. 3

FIG. 5

FIG. 6

FIG. 7